# EUROPÄISCHE PATENTSCHRIFT

(11) **EP 1 789 294 B1**
(45) Veröffentlichungstag und Bekanntmachung des Hinweises auf die Patenterteilung: **13.10.2010**
(21) Anmeldenummer: 05780318.1
(22) Anmeldetag: 15.08.2005
(51) Int. Cl.: B60T 7/02

(54) **VERFAHREN ZUM BETRIEB EINER BREMSANLAGE FÜR KRAFTFAHRZEUGE**
METHOD FOR OPERATING A BRAKING SYSTEM FOR MOTOR VEHICLES
PROCEDE POUR FAIRE FONCTIONNER UN SYSTEME DE FREINAGE DESTINE A DES VEHICULES AUTOMOBILES

(30) Priorität: 01.09.2004 DE 102004042674; 09.07.2005 DE 102005032152
(43) Veröffentlichungstag der Anmeldung: 30.05.2007
(73) Patentinhaber: Continental Teves AG & Co. oHG, 60488 Frankfurt am Main (DE)
(72) Erfinder: KLUSEMANN, Rainer, 60529 Frankfurt am Main (DE)
(86) Internationale Anmeldenummer: PCT/EP2005/054007
(87) Internationale Veröffentlichungsnummer: WO 2006/024601

(56) Entgegenhaltungen:
- DE-A1- 10 308 719
- DE-A1- 19 852 993
- DE-A1- 19 949 203
- US-A1- 2004 043 868

## Beschreibung

Die vorliegende Erfindung betrifft ein Verfahren zum Betrieb einer elektromechanisch betätigbaren Feststellbremse für Kraftfahrzeuge mit einem mit einem mechanischen Schaltgetriebe versehenen Antriebsmotor, die im wesentlichen aus einem Bedienelement, einer elektronischen Steuereinheit, der Raddrehzahlwerte von Raddrehzahlsensoren zugeführt werden, mindestens eine Einheit zur Erzeugung einer Zuspannkraft sowie mit durch die Einheit zuspannbaren Bremseinrichtungen an wenigstens einer Achse gebildet wird, wobei die elektronische Steuereinheit die Einheit nach Erkennen eines Anfahrvorganges des Kraftfahrzeugs im Sinne eines Lösevorganges der Feststellbremse ansteuert, und wobei ein Kupplungspedalwegsensor die Position eines Kupplungspedals des Kraftfahrzeugs ermittelt und ein Ganginformationssensors ermittelt, ob der Fahrzeugführer einen Gang des Getriebes eingelegt hat.

Aus der gattungsgemäßen DE 103 24 446 B3 ist ein Verfahren zur Steuerung eines mit einer elektrischen Feststellbremse ausgestatteten Bremssystems bekannt. Bei dem vorbekannten Verfahren wird mit Hilfe eines Kupplungspedalwegsensors eine erste Zeitspanne vom Beginn des Einkuppelvorgangs bis zu einem Kupplungsansprechzeitpunkt, der dem sogenannten Kupplungsschleifpunkt entspricht, ermittelt. Der Zeitpunkt zur Durchführung eines Lösevorganges der elektrischen Feststellbremse wird um eine zweite Zeitspanne vor dem Kupplungsansprechzeitpunkt gewählt. Das bedeutet, dass die Feststellbremse in Abhängigkeit der Signale des Kupplungspedalwegsensors gelöst wird. Zur Sicherheit kann zusätzlich ein Ganginformationssensor eingesetzt werden, mit dessen Signalen festgestellt wird, ob der Fahrzeugführer einen Gang eingelegt hat. Bei dem vorbekannten Verfahren kann es nach einem Lösevorgang der Feststellbremse zu sicherheitskritischen Situationen kommen, insbesondere wenn der Lösevorgang der Feststellbremse fälschlicherweise aufgrund fehlerhafter Signale durchgeführt wurde, was als weniger vorteilhaft anzusehen ist.

Es ist daher Aufgabe der vorliegenden Erfindung ein Verfahren weiter zu entwickeln, das fälschlicherweise durchgeführte Lösevorgänge der Feststellbremse vermeidet und daher eine größtmögliche Sicherheit bietet.

Diese Aufgabe wird verfahrensmäßig dadurch gelöst, dass ein Signal des Kupplungspedalwegsensors und/oder des Ganginformationssensors durch wenigstens ein zeitgleich vorliegendes Signal wenigstens eines Sensors hinsichtlich Plausibilität überprüft wird.

Dabei ist vorgesehen, dass zur Überprüfung ein Getriebefaktor bestimmt wird, der aus einem Quotienten der Drehzahl des Antriebsmotors und der Geschwindigkeit der angetriebenen Achse bestimmt wird.

Eine besonders vorteilhafte Weiterbildung sieht vor, dass das Signal des Kupplungspedalwegsensors, das eine Betätigung des Kupplungspedals anzeigt, als plausibel eingestuft wird, wenn gleichzeitig der Getriebefaktor nicht konstant ist und der Wert des Getriebefaktors sich innerhalb eines gültigen Bereichs befindet. Als ungültiger Wertbereich für den Getriebefaktor wird dabei der Stillstand des Kraftfahrzeugs angesehen, bei dem der Getriebefaktor den Wert "unendlich" annimmt.

Bei einer weiteren, besonders vorteilhaften Weiterbildung des erfindungsgemäßen Verfahrens ist vorgesehen, dass das Signal des Ganginformationssensors, das einen Wechsel der Gangstufe anzeigt, als plausibel eingestuft wird, wenn gleichzeitig der Getriebefaktor nicht konstant ist und ein Signal des Kupplungspedalwegsensors ermittelt wird, dass das Kupplungspedal getreten und wieder gelöst wurde.

Dabei werden automatische Lösevorgänge der Feststellbremse nicht durchgeführt, wenn zuvor mindestens eines der Signale des Kupplungspedalwegsensors und/oder des Ganginformationssensors als nicht plausibel eingestuft wurde.

Außerdem ist vorgesehen, dass die Information hinsichtlich der Plausibilität der Signale des Kupplungspedalwegsensors und/oder des Ganginformationssensors gespeichert wird und nach erneuter Inbetriebnahme des Kraftfahrzeugs zur Verfügung steht.

Die Erfindung wird nachfolgend anhand eines Ausführungsbeispiels im Zusammenhang mit der beiliegenden Zeichnung näher erläutert. In der Zeichnung zeigen:
- Fig. 1: ein schematisch dargestelltes Schaltbild eines hydraulischen Bremssystems, das eine elektromecha- nische Einheit zur Durchführung von Feststellbrems- vorgängen aufweist und an der das erfindungsgemäße Verfahren durchführbar ist;
- Fig. 2: ein Flussdiagramm zur Erkennung eines Anfahrvorgan- ges und anschließender Ansteuerung für einen Löse- vorgang der Feststellbremse;
- Fig. 3a: eine graphische Darstellung eines Getriebefaktors in Abhängigkeit der Zeit während der Fahrt des Kraftfahrzeugs und
- Fig. 3b: ein graphisch dargestellter Vergleich zwischen dem Getriebefaktor und den Signalen eines Kupplungspe- dalwegsensors und eines Ganginformationssensors.

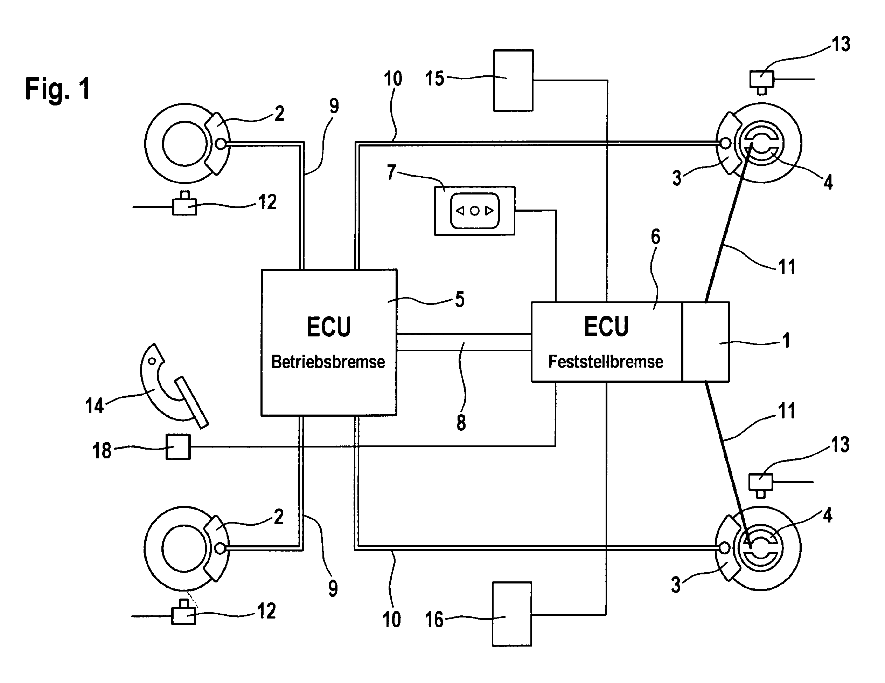

In Fig. 1 ist ein Schaltbild einer hydraulischen Bremsanlage schematisch dargestellt. Die hydraulische Bremsanlage weist an einer ersten Achse, der Vorderachse, Radbremsen 2 auf, die während Betriebsbremsungen über eine hydraulische Leitung 9 mit Druck beaufschlagbar sind. Zur Kontrolle der gewünschten Bremsverzögerung und zur Realisierung einer Blockierschutz-Regelung (Antilock) sowie zur Detektierung der Fahrzeuggeschwindigkeit sind den Rädern der Vorderachse Raddrehzahlsensoren 12 zugeordnet, deren Ausgangssignale einer elektronischen Steuer- und Regeleinheit (ECU) 5 zugeführt werden. Diese elektronische Steuer- und Regeleinheit 5 ist dem Betriebsbremssystem zugeordnet. An einer zweiten Achse, der Hinterachse, sind ebenfalls Radbremsen 3 vorgesehen, die während Betriebsbremsungen über eine zweite hydraulische Leitung 10 mit Druck beaufschlagbar sind. Die Raddrehzahlen der Räder der Hinterachse werden durch Raddrehzahlsensoren 13 ermittelt und der eben erwähnten elektronischen Steuer- und Regeleinheit 5 zugeführt. Außerdem weisen die Räder der Hinterachse neben den Radbremsen 3 für Betriebsbremsungen auch eine elektromechanisch betätigbare Feststellbremse auf. Die elektromechanisch betätigbare Feststellbremse umfasst zwei verriegelbare Bremseinrichtungen 4, die als Trommelbremsen 4 mit jeweils einem nicht näher dargestellten Spreizschloss ausgebildet sind. Das eben genannte Spreizschloss ist mittels eines Kabelzugs 11 von einer elektromechanischen Stelleinheit 1 betätigbar, wonach die Trommelbremsen 4 zugespannt werden. Ein Feststellbremsvorgang wird nach der Betätigung eines Bedienelementes 7 durch den Fahrzeugführer durchgeführt. Dabei werden die Ausgangssignale des Bedienelementes 7 einer der elektromechanischen Feststellbremse zugeordneten elektronischen Steuereinheit (ECU) 6 zugeführt, die die bereits erwähnte elektromechanische Stelleinheit 1 entsprechend ansteuert. Die eben genannte elektronische Steuereinheit 6 sowie die dem Betriebsbremssystem zugeordnete elektronische Steuer- und Regeleinheit 5 kommunizieren miteinander über eine Datenleitung 8, die beispielsweise als CAN-Verbindung ausgebildet sein kann.

In Fig. 1 ist zusätzlich schematisch ein Kupplungspedal 14 mit einem den Kupplungspedalweg ermittelnden Kupplungspedalwegsensor 18 dargestellt. Außerdem werden die Ausgangssignale eines Ganginformationssensors 15 und eines die Hangneigung bestimmenden Sensors zur Neigungserkennung 16 der der Feststellbremse zugeordneten Steuereinheit 6 zugeführt. Der Zweck der genannten Sensoren wird später näher erläutert.

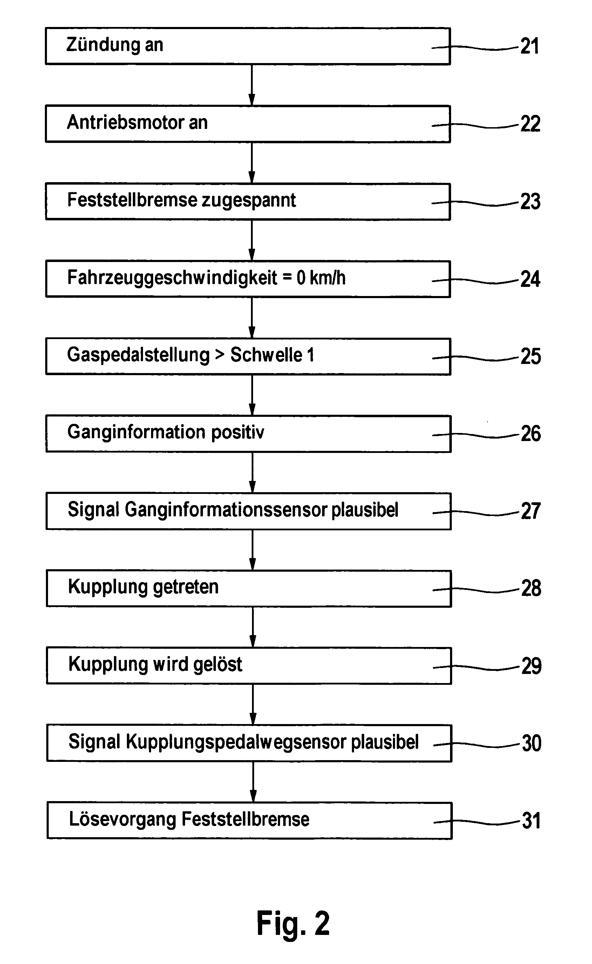

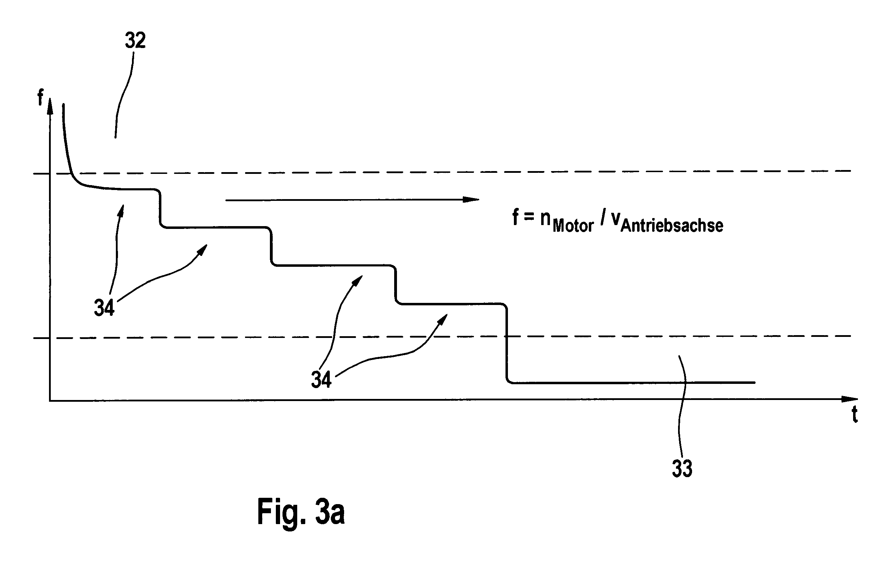

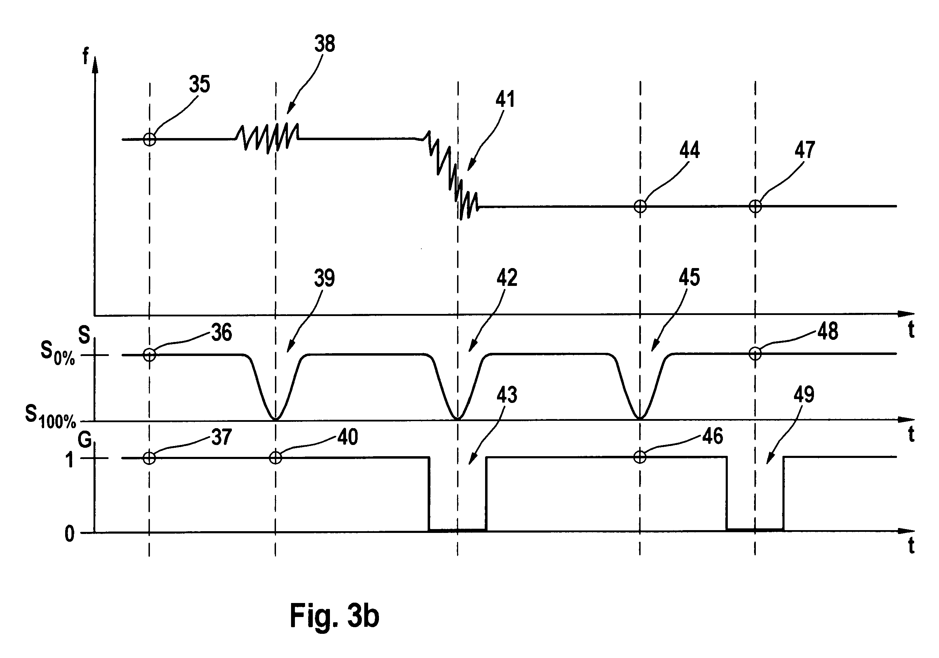

In Fig. 2 ist ein Flussdiagramm zur Erkennung eines Anfahrvorganges des Kraftfahrzeugs dargestellt, wobei die der Feststellbremse zugeordnete Steuereinheit 6 die Stelleinheit 1 nach Erkennung eines Anfahrvorgangs im Sinne eines Lösevorgangs der Feststellbremse ansteuert. Zur Erkennung eines Anfahrvorganges wird im Verfahrensschritt 21 zunächst über eine nicht dargestellte Signalleitung zum nicht dargestellten Zündschloss des Kraftfahrzeugs überprüft, ob die Zündung des Kraftfahrzeugs aktiviert ist. Falls die Zündung aktiviert ist, wird vorbehaltlich der nachfolgenden Verfahrensschritte angenommen, dass das Kraftfahrzeug in Bewegung gesetzt werden soll. Zu diesem Zweck wird zusätzlich im Verfahrensschritt 22 geprüft, ob sich der Antriebsmotor im Betriebsmodus befindet. Anschließend wird überprüft, ob die Feststellbremse zugespannt ist (Verfahrensschritt 23). Im nächsten Verfahrensschritt 24 zur Erkennung des Anfahrvorganges wird mit Hilfe der anhand von Fig. 1 erwähnten Raddrehzahlsensoren 12, 13 festgestellt, ob sich das Kraftfahrzeug im Stillstand befindet. Anschließend wird die Stellung des Gas- bzw. Fahrpedals ermittelt, das für die Erkennung des Anfahrvorganges vom Fahrzeugführer stärker betätigt werden muss als eine vorbestimmte, erste Schwelle (Verfahrensschritt 25). Im nachfolgenden Verfahrensschritt 26 wird mit Hilfe des bereits erwähnten Ganginformationssensors 15 geprüft, ob der Fahrzeugführer einen Gang eingelegt hat. Anschließend wird überprüft, ob das Signal des Ganginformationssensors plausibel ist, bzw. ob eine bei einem vorherigen Betriebsintervall durchgeführte Plausibilitätsprüfung der Signale des Ganginformationssensors 15 positiv ausgefallen ist (Verfahrensschritt 27). Die eben genannte Plausibilitätsprüfung wird nachfolgend anhand von Fig. 3 noch näher erläutert. Durch die Auswertung der Signale des Kupplungspedalwegsensors 18 wird im Verfahrensschritt 28 ermittelt, ob der Fahrzeugführer das Kupplungspedal getreten hat. Sofern der Fahrzeugführer das Kupplungspedal 14 aus der eben erwähnten getretenen Position löst, ist in Verbindung mit den eben erwähnten Bedingungen ein Anfahrvorgang des Kraftfahrzeugs erkannt und die anhand von Fig. 1 erwähnte Steuereinheit 6 steuert die Stelleinheit 1 im Sinne eines Lösevorganges der Feststellbremse an (Verfahrensschritte 29, 31). Vor der Ansteuerung der Stelleinheit 1 wird allerdings noch überprüft, ob das Signal des Kupplungspedalwegsensors 18 plausibel ist bzw. ob eine zuvor durchgeführte Plausibilitätsprüfung der Signale nicht negativ war (Verfahrensschritt 30). Wie bereits erwähnt, wird auf die Plausibilitätsprüfung der Signale des Kupplungspedalwegsensors 18 und des Ganginformationssensors 15 nachfolgend anhand von Fig. 3 näher eingegangen.

Falls das Kraftfahrzeug an einem Hang steht, der eine Steigung aufweist, die größer als eine vorbestimmte, dritte Schwelle ist, so wird zwischen den eben beschriebenen Verfahrensschritten 25 und 26 zusätzlich das Antriebsmoment des Antriebsmotors des Kraftfahrzeugs geschätzt. Dieses geschätzte Antriebsmoment muss größer sein, als eine vorbestimmte, zweite Schwelle. Die Steigung des Hanges wird dabei mit dem anhand von Fig. 1 erwähnten Sensor zur Neigungserkennung 16, der die Neigung des Kraftfahrzeugs bestimmt, ermittelt.

Da es sich bei dem anhand von Fig. 2 beschriebenen automatisierten Lösevorgang der Feststellbremse um ein sicherheitskritisches Verfahren handelt, ist vorgesehen, die Signale des Kupplungspedalwegsensors 18 und des Ganginformationssensors 15 hinsichtlich ihrer Plausibilität zu überprüfen. Das heißt, es soll überprüft werden, ob das Signal, das einer der Sensoren liefert, "richtig" sein kann. Dies geschieht indem Signale weiterer Sensoren, die zeitgleich auftreten, analysiert werden. Bei der Plausibilitätsprüfung der Signale handelt es sich also um einen Funktionstest der zugehörigen Sensoren, der mit Hilfe von Signalen anderer Sensoren durchgeführt wird. Alternativ könnte auch jeder Sensor mehrfach verbaut werden, um mit den redundanten Signalen eine Plausibilitätsprüfung durchzuführen.

Zur Durchführung der eben erwähnten Plausibilitätsprüfung wird zunächst ein Getriebefaktor f bestimmt, der aus einem Quotienten der Drehzahl des Antriebsmotors n_{Motor} und der Geschwindigkeit der angetriebenen Achse V_{Antriebsachse} gebildet wird. Dabei wird die Geschwindigkeit der angetriebenen Achse V_{Antriebsachse} mit Hilfe der anhand von Fig. 1 erwähnten Raddrehzahlsensoren 12, 13 und die Drehzahl des Antriebsmotors n_{Motor} mit Hilfe eines nicht dargestellten Drehzahlmessers bestimmt. Fig. 3a zeigt eine graphische Darstellung des Getriebefaktors f in Abhängigkeit der Zeit während der beschleunigten Fahrt des Kraftfahrzeugs. Der Bereich 32 oberhalb der oberen gestrichelten Linie und der Bereich 33 unterhalb der unteren gestrichelten Linie stellen dabei sogenannte ungültige Bereiche zur Bestimmung des Getriebefaktors f dar. Der erstgenannte Bereich 32 spiegelt dabei z. B. den Leerlauf des Antriebsmotors des Kraftfahrzeugs im Stillstand des Kraftfahrzeugs wider während der zweite ungültige Bereich 33 den Getriebefaktor f darstellt, der sich einstellt, wenn der Antriebsmotor während der Fahrt des Kraftfahrzeugs vom Antriebsstrang entkoppelt wird und Leerlaufdrehzahl zeigt.

Zwischen den beiden ungültigen Bereichen 32, 33 erkennt man in Fig. 3a Abschnitte 34 in denen der Getriebefaktor f konstant ist. Diese konstanten Abschnitte entsprechen jeweils einer eingelegten Gangstufe. Das heißt innerhalb einer Gangstufe ist der Quotient aus Motordrehzahl n_{Motor} und Geschwindigkeit der angetriebenen Achse v_{Antriebsachse} konstant. Der konstante Wert des Getriebefaktors f ist aber für jede Gangstufe unterschiedlich und nimmt einen kleineren Wert an, wenn die Gangstufe erhöht wird. Die Erhöhung der Gangstufe ist mit dem Pfeil in Fig. 3a angedeutet.

In Fig. 3b ist im obersten Bereich der Getriebefaktor f dargestellt. Im mittleren Bereich ist der Betätigungszustand bzw. der Betätigungsweg S des Kupplungspedals 14 dargestellt, wobei ein nicht betätigtes Kupplungspedal 14, d.h. der Fahrzeugführer hat seinen Fuß vom Kupplungspedal 14 genommen, mit dem Wert S_{0%} beschrieben wird. Ein vollständig getretenes Kupplungspedal 14 wird dementsprechend mit dem Wert S_{100%} beschrieben. Im untersten Teil der Fig. 3b ist das Signal G des Ganginformationssensors 15 dargestellt. Ist eine Gangstufe eingelegt, wird das mit dem Wert 1 beschrieben, während eine nicht eingelegte Gangstufe mit dem Wert 0 beschrieben wird.

Anhand der Fig. 3b wird nun das erfindungsgemäße Verfahren näher erläutert. Wie bereits erwähnt, ist der Getriebefaktor f während der Fahrt des Kraftfahrzeugs innerhalb einer Gangstufe konstant, wie es der mit dem Bezugszeichen 35 bezeichnete Bereich darstellt. Gleichzeitig ist das Kupplungspedal 14 vom Fahrzeugführer nicht betätigt (Position 36) und es ist eine Gangstufe eingelegt (Position 37).

Tritt der Fahrzeugführer während der Fahrt des Kraftfahrzeugs das Kupplungspedal 14, so geht der Wert des Signals S des Kupplungspedalwegsensors 18 von der Ausgangslage S_{0%} zu S_{100%} über und wieder zurück zu S_{0%} wenn der Fahrzeugführer das Kupplungspedal 14 wieder löst (Position 39). Da durch die Entkopplung des Antriebsmotors die Motordrehzahl n_{Motor} nicht konstant ist, ist gleichzeitig der Getriebefaktor f nicht konstant (Position 38) und das eben beschriebene Signal des Kupplungspedalwegsensors 18 wird als plausibel eingestuft, obwohl der Ganginformationssensor 15 keinen Wechsel der Gangstufe ermittelt hat (Position 40). Bei dem eben beschriebenen Vorgang handelt es sich daher um eine Betätigung des Kupplungspedals 14 durch den Fahrzeugführer während der Fahrt des Kraftfahrzeugs ohne dass dabei ein Wechsel der Gangstufe vorgenommen wurde. Dies erkennt man auch daran, dass der Getriebefaktor f vor und nach dem nicht konstanten Bereich 38 denselben Wert aufweist. Hätte ein Wechsel der Gangstufe stattgefunden, müsste sich der Wert für den Getriebefaktor f vor und nach dem nicht konstanten Bereich unterscheiden, wie anhand von Fig. 3a ausgeführt wurde.

Position 43 in Fig. 3b stellt einen solchen Wechsel der Gangstufe dar. Zunächst ist eine Gangstufe eingelegt, d.h. das Signal G des Ganginformationssensors 15 weist den Wert 1 auf. Anschließend ist keine Gangstufe eingelegt, was durch den Wert 0 des Signals G erkennbar ist. Eine anschließend wieder eingelegte Gangstufe wird durch den Wert 1 des Signals G dargestellt. Diese Signalfolge des Ganginformationssensors 15 wird als plausibel eingestuft, da gleichzeitig ein Signal des Kupplungspedalwegsensors 18 ermittelt wird, dass das Kupplungspedal 14 getreten und wieder gelöst wurde (Position 42). Zudem ist der Getriebefaktor f zeitgleich nicht konstant und weist vor dem nicht konstanten Bereich einen anderen Wert auf als danach (Position 41), was ebenfalls auf einen Wechsel der Gangstufe hinweist, wie bereits erläutert wurde.

Das Signal des Kupplungspedalwegsensors 18, dass das Kupplungspedal 14 getreten und wieder gelöst wurde, wie es in Position 45 dargestellt ist, wird als unplausibel eingestuft, wenn gleichzeitig der Getriebefaktor f absolut konstant ist (Position 44) und zusätzlich der Ganginformationssensor 15 keinen Wechsel der Gangstufe ermittelt (Position 46). In diesem Fall ist besteht der Verdacht, dass der Kupplungspedalwegsensor 18 defekt ist.

Ebenso wird das Signal des Ganginformationssensors 15, dass ein Wechsel der Gangstufe stattgefunden hat (Position 49) als unplausibel eingestuft, wenn zeitgleich zu dem eben beschriebenen Signal der Getriebefaktor f konstant ist (Position 47) und kein Signal des Kupplungspedalwegsensors 18, dass das Kupplungspedal 14 getreten und wieder gelöst wurde, ermittelt wird (Position 48).

Falls der Kupplungspedalwegsensor 18 oder der Ganginformationssensor 15 defekt sind bzw. deren Signale nicht plausibel sind, so werden diese Signale für einen automatischen Lösevorgang der Feststellbremse bei einem Anfahrvorgang des Kraftfahrzeugs nicht verwendet. Gegebenenfalls steht der automatische Lösevorgang der Feststellbremse bei einem Anfahrvorgang dem Fahrzeugführer nicht zur Verfügung. Dieses kann dem Fahrzeugführer mit Hilfe eines optischen oder akustischen Signals übermittelt werden.

Die Tatsache, dass die Signale des Kupplungspedalwegsensors 18 oder des Ganginformationssensors 15 nicht plausibel sind, wird in einem nicht dargestellten nichtflüchtigen Speicher gespeichert, sodass diese Information auch nach erneuter Inbetriebnahme des Kraftfahrzeugs zur Verfügung steht. Dadurch kann der Fahrzeugführer erneut daraufhin gewiesen werden, eine Werkstatt aufzusuchen. Außerdem wird auch nach erneuter Inbetriebnahme des Kraftfahrzeugs ein automatischer Lösevorgang der Feststellbremse aufgrund der fehlerhaften Signale des Kupplungspedalwegsensors 18 oder des Ganginformationssensors 15 verhindert. Außerdem kann ein einmal als unplausibel eingestufter Sensor auch wieder als plausibel gelernt werden, wenn die Signale des betroffenen Sensors in der Folgezeit mehrfach wieder als plausibel eingestuft werden. Damit kann der deaktivierte automatische Lösevorgang wieder aktiviert werden.

Alternativ zum erfindungsgemäßen Verfahren, könnten der Kupplungspedalwegsensor 18 und der Ganginformationssensor 15 doppelt ausgeführt werden und deren Signale miteinander verglichen werden. Durch das erfindungsgemäße Verfahren kann jedoch auf diesen redundanten Einsatz der Sensoren verzichtet werden, da durch das beschriebene Verfahren die Funktionsfähigkeit einzelner Sensoren überprüft wird, indem deren Signale mit Signalen weiterer Sensoren, deren Signale zeitgleich zu den Signalen der erstgenannten Sensoren auftreten, verglichen wird.

## Patentansprüche

1. Verfahren zum Betrieb einer elektromechanisch betätigbaren Feststellbremse für Kraftfahrzeuge mit einem mit einem mechanischen Schaltgetriebe versehenen Antriebsmotor, die im wesentlichen aus einem Bedienelement (7), einer elektronischen Steuereinheit (6), der Raddrehzahlwerte von Raddrehzahlsensoren (12, 13) zugeführt werden, mindestens eine Einheit (1) zur Erzeugung einer Zuspannkraft sowie mit durch die Einheit (1) zuspannbaren Bremseinrichtungen (4) an wenigstens einer Achse gebildet wird, wobei die elektronische Steuereinheit (6) die Einheit (1) nach Erkennen eines Anfahrvorganges des Kraftfahrzeugs im Sinne eines Lösevorganges der Feststellbremse ansteuert, und wobei ein Kupplungspedalwegsensor (18) die Position eines Kupplungspedals (14) des Kraftfahrzeugs ermittelt und ein Ganginformationssensor (15) ermittelt, ob der Fahrzeugführer einen Gang des Getriebes eingelegt hat, **dadurch gekennzeichnet, dass** ein Signal des Kupplungspedalwegsensors (18) und/oder des Ganginformationssensors (15) durch wenigstens ein zeitgleich vorliegendes Signal wenigstens eines Sensors hinsichtlich Plausibilität überprüft wird.

2. Verfahren nach Anspruch 1, **dadurch gekennzeichnet, dass** zur Überprüfung ein Getriebefaktor (f) bestimmt wird, der aus einem Quotienten der Drehzahl des Antriebsmotors (n_{Motor}) und der Geschwindigkeit der angetriebenen Achse (v_{Antriebsachse}) bestimmt wird.

3. Verfahren nach Anspruch 2, **dadurch gekennzeichnet, dass** das Signal des Kupplungspedalwegsensors (18), das eine Betätigung des Kupplungspedals (14) anzeigt, als plausibel eingestuft wird, wenn gleichzeitig der Getriebefaktor (f) nicht konstant ist und der Wert des Getriebefaktors (f) sich innerhalb eines gültigen Bereichs befindet.

4. Verfahren nach Anspruch 2 oder 3, **dadurch gekennzeichnet, dass** das Signal des Ganginformationssensors (15), das einen Wechsel der Gangstufe anzeigt, als plausibel eingestuft wird, wenn gleichzeitig der Getriebefaktor (f) nicht konstant ist und ein Signal des Kupplungspedalwegsensors (18) ermittelt wird, dass das Kupplungspedal (14) getreten und wieder gelöst wurde.

5. Verfahren nach einem der vorhergehenden Ansprüche, **dadurch gekennzeichnet, dass** automatische Lösevorgänge der Feststellbremse nicht durchgeführt werden, wenn zuvor mindestens eines der Signale des Kupplungspedalwegsensors (18) und/oder des Ganginformationssensors (15) als nicht plausibel eingestuft wurde.

6. Verfahren nach einem der vorhergehenden Ansprüche, **dadurch gekennzeichnet, dass** die Information hinsichtlich der Plausibilität der Signale des Kupplungspedalwegsensors (18) und/oder des Ganginformationssensors (15) gespeichert wird und nach erneuter Inbetriebnahme des Kraftfahrzeugs zur Verfügung steht.

## Claims

1. Method for operating an electromechanically actuable parking brake for motor vehicles having a drive motor which is provided with a mechanical indexing mechanism and which is formed essentially from an operator control element (7), an electronic control unit (6) to which wheel speed values of wheel speed sensors (12, 13) are fed, at least one unit (1) for generating a brake application force, and having brake devices (4), which can be applied by the unit (1), on at least one axle, wherein the electronic control unit (6) actuates the unit (1) in the sense of a release process of the parking brake after a starting process of the motor vehicle has been detected, and wherein a clutch pedal travel sensor (18) determines the position of a clutch pedal (14) of the motor vehicle, and a gear speed information sensor (15) determines whether the driver of the vehicle has engaged a gear speed of the transmission, **characterized in that** a signal of the clutch pedal travel sensor (18) and/or the gear speed information sensor (15) are checked for plausibility by at least one simultaneously present signal of at least one sensor.

2. Method according to Claim 1, **characterized in that**, for the purpose of checking, a transmission factor (f) is determined which is determined from a quotient of the rotational speed of the drive motor (nₘₒₜₒᵣ) and of the speed of the driven axle (v_{driveaxle}).

3. Method according to Claim 2, **characterized in that** the signal of the clutch pedal travel sensor (18) which indicates actuation of the clutch pedal (14) is classified as plausible if at the same time the transmission factor (f) is not constant and the value of the transmission factor (f) is within a valid range.

4. Method according to Claim 2 or 3, **characterized in that** the signal of the gear speed information sensor (15), which indicates a change of the gear step, is classified as plausible if at the same time the transmission factor (f) is not constant and a signal of the clutch pedal travel sensor (18) is determined which indicates that the clutch pedal (14) has been depressed and released again.

5. Method according to one of the preceding claims, **characterized in that** automatic release processes of the parking brake are not carried out if at least one of the signals of the clutch pedal travel sensor (18) and/or of the gear speed information sensor (15) have previously been classified as implausible.

6. Method according to one of the preceding claims, **characterized in that** the information relating to the plausibility of the signals of the clutch pedal travel sensor (18) and/or of the gear speed information sensor (15) is stored and is available after renewed activation of the motor vehicle.

## Revendications

1. Procédé pour faire fonctionner un frein de stationnement pouvant être actionné de manière électromécanique, pour véhicules automobiles, comprenant un moteur d'entraînement pourvu d'une boîte de vitesses mécanique, qui est formé essentiellement d'un élément de commande (7), d'une unité de commande électronique (6) à laquelle sont acheminées des valeurs de vitesse de rotation de roue de capteurs de vitesse de rotation de roue (12, 13), d'au moins une unité (1) pour produire une force de serrage ainsi que de dispositifs de freinage (4) pouvant être serrés par l'unité (1) sur au moins un essieu, l'unité de commande électronique (6) commandant l'unité (1) après qu'une opération de démarrage du véhicule automobile a été reconnue au sens d'une opération de desserrage du frein de stationnement, et dans lequel un capteur de course de pédale d'embrayage (18) détermine la position d'une pédale d'embrayage (14) du véhicule automobile et un capteur d'information de vitesse (15) détermine si le conducteur du véhicule a enclenché une vitesse de la boîte de vitesses, **caractérisé en ce qu'**un signal du capteur de course de pédale d'embrayage (18) et/ou du capteur d'information de vitesse (15) est contrôlé en termes de plausibilité par au moins un signal d'au moins un capteur se produisant en même temps.

2. Procédé selon la revendication 1, **caractérisé en ce que** l'on détermine pour le contrôle un facteur d'engrenage (f) qui est déterminé à partir d'un quotient du régime du moteur d'entraînement (n_{Moteur}) et de la vitesse de l'essieu entraîné (v_{essieuentraîné}).

3. Procédé selon la revendication 2, **caractérisé en ce que** le signal du capteur de course de pédale d'embrayage (18), qui indique un actionnement de la pédale d'embrayage (14), est classé comme plausible lorsque simultanément le facteur d'engrenage (f) n'est pas constant et la valeur du facteur d'engrenage (f) se trouve à l'intérieur d'une plage valable.

4. Procédé selon la revendication 2 ou 3, **caractérisé en ce que** le signal du capteur d'information de vitesse (15) qui indique un changement de rapport de vitesse, est classé comme plausible lorsque simultanément le facteur d'engrenage (f) n'est pas constant et un signal du capteur de course de la pédale d'embrayage (18) est détecté, lequel indique que la pédale d'embrayage (14) a été enfoncée et à nouveau relâchée.

5. Procédé selon l'une quelconque des revendications précédentes, **caractérisé en ce que** des opérations de desserrage automatiques du frein de stationnement ne sont pas effectuées quand préalablement au moins l'un des signaux du capteur de course de pédale d'embrayage (18) et/ou du capteur d'information de vitesse (15) a été classé comme non plausible.

6. Procédé selon l'une quelconque des revendications précédentes, **caractérisé en ce que** l'information concernant la plausibilité des signaux du capteur de course de pédale d'embrayage (18) et/ou du capteur d'information de vitesse (15) est mémorisée et est disponible après redémarrage du véhicule automobile.
